# EUROPEAN PATENT SPECIFICATION

(11) **EP 3 931 489 B1**
(45) Date of publication and mention of the grant of the patent: **10.07.2024**
(21) Application number: 21724240.3
(22) Date of filing: 04.05.2021
(51) Int. Cl.: F23C 10/20

(54) **FLUIDIZED BED GAS DISTRIBUTION NOZZLE AND FLUIDIZED BED REACTOR**
WIRBELSCHICHTGASVERTEILUNGSDÜSE UND WIRBELSCHICHTREAKTOR
BUSE DE DISTRIBUTION DE GAZ POUR LIT FLUIDISÉ ET RÉACTEUR À LIT FLUIDISÉ

(30) Priority: 04.05.2020 EP 20172713
(43) Date of publication of application: 05.01.2022
(73) Proprietor: Doosan Lentjes GmbH, 40880 Ratingen Nordrhein-Westfalen (DE)
(72) Inventor: NARIN, Oguzhan, 45549 Sprockhövel Nordrhein-Westfalen (DE); BROSCH, Björn, 45136 Essen (DE)
(74) Representative: Feucker, Max Martin
(86) International application number: PCT/EP2021/061745
(87) International publication number: WO 2021/224271

(56) References cited:
- CN-Y- 201 429 075
- DE-U1- 20 213 861
- GB-A- 1 396 588
- KR-A- 20050 002 234

## Description

The present invention relates to a fluidized bed gas distribution nozzle as used in a fluidized bed reactor and to a respective fluidized bed reactor.

Usually fluidized bed reactors are in the form of combustors, boilers, gasifiers etc. The fluidized bed reactors usually comprise a grid (also called a grate or a perforated plate) supporting a bed of particulate material, for example a fuel material like coal, sand and ash. A reaction gas, such as air is introduced into said bed by means of fluidized bed gas distribution nozzles which form (eventually together with the grid) the fluidized bottom of the fluidized bed reactor. As a result of said gas which is fed into and passes the particulate material the particulate material receives a fluid like state.

Various types of fluidized bed gas distribution nozzles are known from the prior art. One type of those known nozzles to which the present inventions refers is known from EP 2 884 171 B1 and comprises the following features in its functional position:
- a gas inlet pipe, having an inner surface, an outer surface, a lower end section adapted to receive gas from an associated gas source, an upper end section, a plurality of openings preferably formed in the upper end section, each opening extending form the inner surface of the gas inlet pipe to the outer surface of the gas inlet pipe,
- a gas distribution cap connected or connectable to the gas inlet pipe, having an upper top, a lower bottom arranged at a vertical distance below said upper top and surrounding the gas inlet pipe (preferably arranged close to or touching the outer surface of the gas inlet pipe), a peripheral wall having an inner surface and an outer surface and extending between said upper top and said lower bottom and outlets within the peripheral wall extending from the inner surface of the peripheral wall to the outer surface of the peripheral wall.

Accordingly, gas may flow from within the lower end section of the gas inlet pipe through the openings at the upper end section into a space between corresponding sections of the outer surface of the gas inlet pipe and the inner surface of the peripheral wall of the air distribution cap and from said space through the outlets of the gas distribution cap into an ambient area.

This design is similar to a mushroom with its shaft being the gas inlet pipe and its head presenting the air distribution cap. In other words: gas is fed vertically upward through the gas inlet pipe, fed through the openings in the upper end section of the gas inlet pipe into the mostly annular space between the gas inlet pipe and the air distribution cap and further in a substantially horizontal direction through the outlets of the gas distribution cap and insofar through the peripheral wall of the gas distribution cap into the surrounding area and in particular into the fluidized bed of a fluidized bed reactor.

At a constant pressure of the gas provided from the associated gas source, the volume flowing through the fluidized bed distribution nozzle depends on the number, size and shape of the openings and of the outlets so that the fluidized bed gas distribution nozzles have to be constructed for a specific application case.

GB 1 396 588 A and CN 201 429 075 Y each disclose a fluidized bed gas distribution nozzle according to the preamble of claim 1. The fluidized bed gas distribution nozzle comprises a gas distribution cap being fixed to the gas inlet pipe in exactly one position, so that openings in the gas distribution cap match with openings in the gas inlet pipe.

It is therefore an object of the invention to resolve the drawbacks of the known nozzles and to provide a fluidized bed gas distribution nozzle which can be easily adapted to demand with regard to the amount of gas to be provided to the fluidized bed.

This object is solved with a fluidized bed gas distribution nozzle with the features of the independent claim. Preferred embodiments of the nozzle are described in the dependent claims and in the description, wherein single features of the preferred embodiments can be combined with each other in a technical meaningful manner.

The object is in particular solved in that the gas distribution cap can be connected at least in a first position and in a second position (preferably also in a third, in a fourth position or further positions) to the gas inlet pipe, wherein in the second position the gas distribution cap at least partly closes at least some of the openings.

By closing at least some of the openings at least partly the flow cross section for the gas is altered (in particular reduced) so that the amount of gas provided into the fluidized bed can be easily altered, when the gas is supplied with the same pressure. Therefore, it can be decided at the construction site of the fluidized bed reactor, if the gas distribution cap is connected to the gas inlet pipe in the first position or in the second (or even in a third, fourth or further) position.

The first and the second position is a predetermined connecting position.

The gas inlet pipe and the gas distribution cap are mechanically embodied to provide a first predetermined connecting position and a second predetermined connecting position and preferably further predetermined connecting positions. Therefore, a respective predetermined connecting position is uniquely identified by a respective mechanical feature of the gas inlet pipe and its corresponding mechanical feature of the gas distribution cap. Preferably, the gas inlet pipe and the gas distribution cap are embodied in such a way, that in the first position the openings of the gas inlet pipe are not closed (for example covered) by the gas distribution cap at all, so that all openings of the gas inlet pipe can be flown through by the gas provided through the lower end section.

Preferably, the gas distribution cap and the gas inlet pipe are embodied in such a way, that in the second position at least 25%, more preferably at least 40% or even at least 50% of the overall cross section area of all openings is closed by the gas distribution cap. It is also possible, that in the second position one half of the total number of openings are closed completely by the gas distribution cap.

If a gas distribution cap can be connected to the gas inlet pipe in three or four positions, 20% to 30% of the overall cross section area of all openings are closed in the second position, 40% to 60% are closed in the third position and 70% to 90% are closed in the fourth position. In case of three or four possible (in particular predetermined connecting) positions it is also possible, that one quarter of the number of openings are completely closed in the second position, one half of the number of openings are completely closed in the third position and three fourths of the number of openings are closed in the third position.

The first position may differ from the second position in that the gas distribution cap is displaced by a rotational movement in the circumferential direction of the gas inlet pipe. Accordingly, the gas distribution cap may be connected, in particular fixed, in two, three, four or more different rotational positions with regard to the gas inlet pipe.

Preferably, the first position of the gas distribution cap differs from the second position of the gas distribution cap in that the gas distribution cap is displaced axially in the longitudinal direction of the gas inlet pipe. Accordingly, the gas distribution cap may be connected/fixed in two, three, four or more different positions with regard to the longitudinal direction of the gas inlet pipe.

Of course, it is also possible that the gas distribution cap is displaced axially and rotationally in the different positions, wherein the directions refer to the gas inlet pipe.

In order to provide at least one predetermined connecting position in one embodiment recesses (as above mentioned mechanical feature) and corresponding protrusions (as above mentioned corresponding mechanical feature) may be formed at the upper end section of the gas inlet pipe and on an inner side of the upper top of the gas distribution cap, wherein the recesses are arranged within the corresponding protrusion in one of the positions (for example in the second position) and not in the other position (for example in the first position). Preferably, the recesses are formed on the upper end section of the gas inlet pipe and the protrusions are formed on the gas distribution cap, so that in the first position the protrusions are arranged (abut against) on the upper end face of the upper end section of the gas inlet pipe, while the protrusions are arranged within the respective recesses in the second position. Accordingly, the gas distribution cap is arranged longitudinally and rotationally offset between the first position and second position, whereby the recesses (receiving the protrusion) also avoid rotational movement of the gas distribution cap.

The recesses and protrusions may be formed in such a way that the protrusions are frictionally locked within the respective recesses.

In order to provide a third (in particular predetermined) position there might be formed a further group of recesses on the upper end section of the gas inlet pipe, in which the protrusions are arranged, when the gas distribution cap is arranged in the third position. There might be further (third or more) groups of recesses in which the protrusions are arranged in the respective fourth or further position. Also, a group of recesses may be provided in which the protrusions are arranged in the first position. The recesses for each of the positions differ from the recesses of the other positions in their circumferential position and depths.

In this case, if axial forces are applied to the top of the gas distribution cap the forces are transferred to the gas inlet pipe through the protrusions formed on the inner side of the gas distribution cap.

In order to provide different (predetermined) positions, in a further embodiment the gas inlet pipe may have at least a first pipe group of at least two pipe positioning holes (as above mentioned mechanical feature) and the gas distribution cap may have at least a first cap group of at least two cap positioning holes (as above mentioned corresponding mechanical feature), wherein at least one pin extends through the pipe positioning holes and the cap positioning holes to connect the gas distribution cap to the gas inlet pipe. The at least one pin secures the gas distribution cap against unintentional removement and can also provide force transfer, if forces are applied to the gas distribution cap.

When removing the at least one pin the gas distribution cap can easily be repositioned in a different position to the gas inlet pipe.

Also in this case, in the first or second position, the inner side of the gas distribution cap may abut at its upper top to the upper end face of the gas inlet pipe, while in the other position the at least one pin provides the connection between the gas distribution cap and the gas inlet pipe.

In order that the at least one pin can connect the gas distribution cap to the gas inlet pipe in more than one position, the gas inlet pipe comprises a second pipe group of at least two pipe positioning holes, wherein the pipe positioning holes of the second pipe group are arranged offset preferably in the longitudinal direction and in particular also in the circumferential direction relative to the pipe positioning holes of the first pipe group. Alternatively, the gas distribution cap comprises a second cap group of at least two cap positioning holes, the cap positioning holes of the second cap group being arranged offset preferably in the longitudinal direction and in particular also in the circumferential direction relative to the cap positioning holes of the first cap group. Of course, for providing further positions there can be even further groups of pipe positioning holes or cap position holes which are arranged offset in the longitudinal direction and in particular also in the circumferential direction with respect to the positioning holes of the other groups.

The pipe positioning holes may be located below the openings in the gas inlet pipe. But preferably the pipe positioning holes are located above the opening in (the upper end section of) the gas inlet pipes.

The cap positioning holes may be located in the peripheral wall of the gas distribution cap above or below the outlets. But preferably the cap positioning holes are formed in the upper top of the gas distribution cap or in the peripheral wall close to the upper top.

The at least one pin may be dimensioned with its diameter in such a way, that it is frictionally locked in the positioning holes. Regarding its length the pin may be dimensioned such that it does not protrude over the outer surface of the cap.

There may be exactly one pin extending through two oppositely arranged cap positioning holes and two oppositely arranged pipe positioning holes in the respective position. In this case the pin extends over the inner cross section of the gas inlet pipe.

Alternatively, there may be one pin for each pair of a cap positioning hole and a pipe positioning hole in the respective position. Such a pin has preferably a length, so that it does not protrude over the inner surface of the gas inlet pipe and the outer surface of the gas distribution cap, thereby avoiding/minimizing contact with the gas (in particular within the gas inlet pipe) and/or with the particulate matter (in particular on the outside of the cap). This way, turbulences and erosion may be minimized/avoided.

The pin may be embodied as grooved dowel pin (German: Zylinderkerbstift).

In a preferred embodiment, the openings of the gas inlet pipe may be arranged at least in a first group of openings and in a second group of openings, wherein the first group of openings and the second group of openings are arranged offset to each other in the longitudinal direction of the gas inlet pipe, wherein in the second position the first group of openings is at least partly, preferably completely closed by the gas distribution cap. Accordingly, in the second position the openings of the second group are completely closed, while preferably, the other openings are not closed at all. This way turbulences of the gas flow by only partly closed openings are avoided.

In this regard, it is also preferred that the first group of openings and the second group of openings are each arranged in a row extending in the circumferential direction of the gas inlet pipe. Also, further (third, fourth or more) groups of openings may also be arranged behind above each.

For closing the openings at least in the second position, the gas distribution cap may have a collar (protrusion) extending into or surrounding the upper end section of the gas inlet pipe at least in the second position, whereby the collar at least partly closes at least some of the openings in the second position. The collar may extend uniformly and completely in the circumferential direction of the gas inlet pipe. Alternatively, the collar may have discrete sections arranged behind each other in the circumferential direction of the gas inlet pipe. Therefore, in the first position the collar may be arranged in such a way, that no openings of the gas inlet pipe are covered, while in the second position at least some of the openings are partly or even completely covered by the respective sections of the collar.

In the mounted state the outlets of the gas distribution cap and the openings of the gas inlet pipe may be arranged offset to each other in the longitudinal direction of the gas inlet pipe, so that gas flowing through the openings of the gas inlet pipe is directed downwardly in the space between the outer surface of the gas inlet pipe and the inner surface of the peripheral wall before leaving the gas distribution nozzle in a horizontal direction through the outlets of the gas distribution cap.

The invention also relates to a fluidized bed reactor including a plurality of the before described fluidized bed gas distribution nozzles. The plurality of nozzles (more than four, preferably more than 10 or even more than 20) may be arranged in rows or in staggered arrangement at the fluidized bottom of the fluidized bed reactor.

In an embodiment, the fluidized bed gas distribution nozzles of a first group have their respective gas distribution caps connected in the first position to their respective gas inlet pipe, while the fluidized bed gas distribution nozzles of a second group have their gas distribution caps connected in a second position to their gas inlet pipes. Accordingly, in a part of the fluidized bottom which comprises the gas distribution nozzles of the first group a greater volume of gas is provided by each nozzle than in the second part of the fluidized bottom comprising the fluidized bed gas distribution nozzles of the second group.

The technical background and the invention will now be described with regard to the drawings, which show embodiments of the invention in a schematic way in cross sectional view
- Figure 1:: a first embodiment of a fluidized bed gas distribution nozzle in a second position,
- Figure 2:: the nozzle of figure 1 in a first position,
- Figure 3:: a gas inlet pipe of a second embodiment of a fluidized bed gas distribution nozzle,
- Figure 4:: a gas distribution cap of the second embodiment of the nozzle,
- Figure 5:: the second embodiment in a second position,
- Figure 6:: a third embodiment of a fluidized bed gas distribution nozzle in a first position,
- Figure 7:: the third embodiment of a fluidized bed gas distribution nozzle in a second position and
- Figure 8:: the third embodiment of a fluidized bed gas distribution nozzle in a third position.

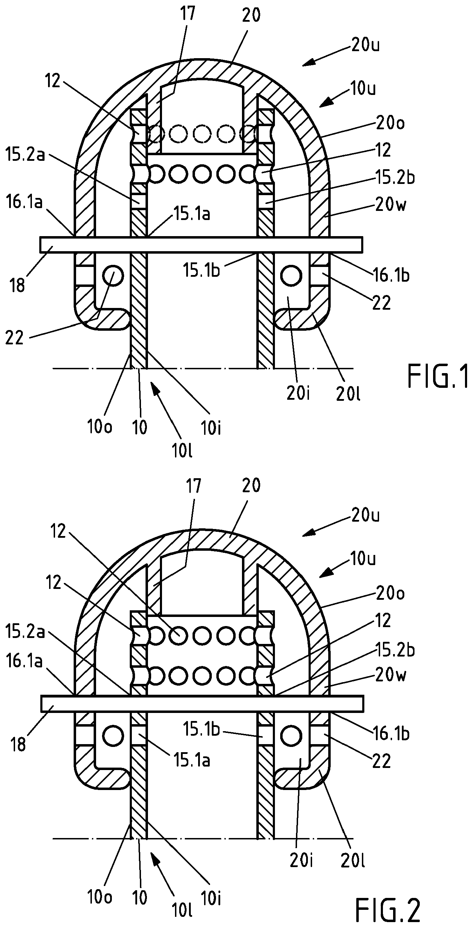

The fluidized bed gas distribution nozzles depicted in figures 1 to 8 comprise a gas inlet pipe 10 and a gas distribution cap 20.

The gas inlet pipe 10 has an inner surface 10i, an outer surface 10o and extends from a lower end section 10l to an upper end section 10u. The lower end section 10l is adapted to receive gas from an associated gas source. A plurality of openings 12 is formed in the upper end section 10u of the gas inlet pipe 10. Each opening 12 extends from the inner surface 10i to the outer surface 10o of the gas inlet pipe 10. The openings 12 are arranged in two rows extending in the circumferential direction of the gas inlet pipe 10. The lower row of openings 12 forms a first group of openings 12 and the upper row of openings 12 forms a second group of openings 12.

The gas distribution cap has an upper top 20u and a lower bottom 20l, wherein the lower bottom 20l is arranged at a vertical distance below the upper top 20u and surrounds the gas inlet pipe 10, wherein the lower bottom 20l abuts against the outer surface 10o of the gas inlet pipe 10. A peripheral wall 20w of the gas distribution cap 20 extends from the upper top 20u to the lower top 20l. The peripheral wall 20w has an inner surface 20i and an outer surface 20o. Furthermore, outlets 22 are formed in the peripheral wall 20w, wherein the outlets 22 extend from the inner surface 20i to the outer surface 20o. Additionally, the gas distribution cap 20 has a collar 17 formed on the inner side at the upper top 20u.

According to the embodiment shown in figures 1 and 2 a first pair of pipe positioning holes 15.1a and 15.1b and a second pair of pipe positioning holes 15.2a and 15.2b are formed in the gas inlet pipe 10 below the openings 12, wherein the pipe positioning holes 15.2a and 15.2b are arranged above the pipe positioning holes 15.1a and 15.1b. The gas distribution cap 20 has a corresponding pair of cap positioning holes 16.1a and 16.1b.

In the first position depicted in figure 2 a pin 18 extends through the cap positioning holes 16.1a and 16.1b and through the pipe positioning holes 15.2a and 15.2b, thereby connecting and securing the gas distribution cap 20 to the gas inlet pipe 10. In the first position all openings 12 in gas inlet pipe 10 are uncovered, so that gas flowing from the lower end section 10l into gas inlet pipe 10 flows through openings 12 into an intermediate space between the gas inlet pipe 10 and the gas distribution cap 20 and from there through outlets 22 into the surrounding.

In order to bring the gas distribution cap 20 in a different position the pin 18 is removed and the gas distribution cap 20 is displaced axially downwards into the position shown in figure 1. In this position the pin 18 is entered through cap positioning holes 16.1a and 16.1b as well as through pipe positioning holes 15.1a and 15.1b. In this position the upper row of openings 10 in the gas inlet pipe 10 is closed by the collar 17, which is inserted into the pipe 10.

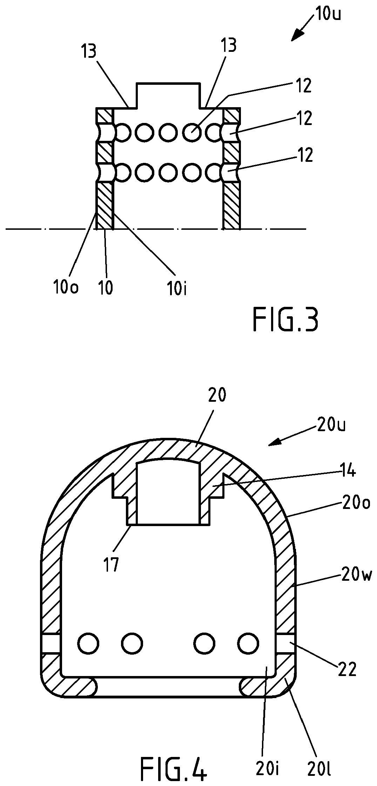

According to the embodiment of figures 3 to 5 the gas inlet pipe 10 has recesses 13 at is upper end section 10u. Additionally, the gas distribution cap 20 has protrusions 14 next to the collar 17.

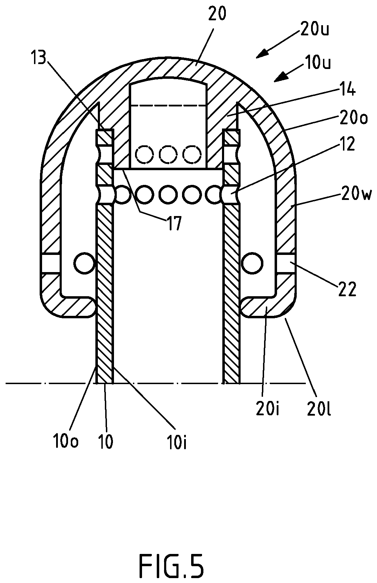

In the second position depicted in figure 5 the protrusions 14 are arranged within the recesses 13, whereas the collar 17 covers the upper row of openings 12.

The gas distribution cap 20 can be lifted upwards from the second position shown in figure 5 and turned about 90° so that the protrusions 14 come to rest on the upper end face of the gas inlet pipe 10 between the recesses 13 with its lower surfaces, in which first position the upper row of the openings 12 are not covered.

Accordingly, in the second position the gas entering the gas inlet pipe 10 at its lower end section 10l can only flow through the lower row of openings 12, so that the amount of gas flowing through the fluidized bed gas distribution nozzle is reduced with respect to the first position, when the same gas pressure is applied.

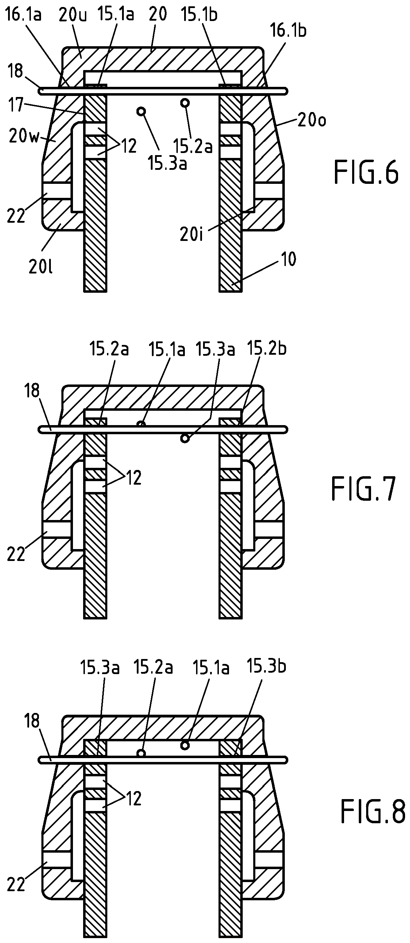

According to the embodiment shown in figures 6 to 8 a first pair of pipe positioning holes 15.1a and 15.1b, a second pair of pipe positioning holes 15.2a and 15.2b and a third pair of pipe positioning holes 15.3a and 15.3b are formed in the gas inlet pipe 10 above the openings 12, wherein the pipe positioning holes 15.1a and 15.1b are arranged above and displaced circumferentially to the pipe positioning holes 15.2a and 15.2b, which in turn are arranged above and displaced circumferentially to the pipe positioning holes 15.3a and 15.3b. The gas distribution cap 20 has a corresponding pair of cap positioning holes 16.1a and 16.1b just below the upper top 20u, which is formed in a flat manner.

In the first position depicted in figure 6 a pin 18 extends through the cap positioning holes 16.1a and 16.1b and through the pipe positioning holes 15.1a and 15.1b, thereby connecting and securing the gas distribution cap 20 to the gas inlet pipe 10. In the first position all openings 12 in gas inlet pipe 10 are uncovered, so that gas flowing from the lower end section 10l into gas inlet pipe 10 flows through openings 12 into an intermediate space between the gas inlet pipe 10 and the gas distribution cap 20 and from there through outlets 22 into the surrounding.

In order to bring the gas distribution cap 20 in a further position the pin 18 is removed and the gas distribution cap 20 is turned and displaced axially downwards into the second position shown in figure 7. In this position the pin 18 is entered through cap positioning holes 16.1a and 16.1b as well as through pipe positioning holes 15.2a and 15.2b. In this second position the upper row of openings 10 in the gas inlet pipe 10 is partly closed by the collar 17 which surrounds the pipe 10.

In order to bring the gas distribution cap 20 in an even further position the pin 18 is removed and the gas distribution cap 20 is turned and displaced axially downwards into the third position shown in figure 8. In this position the pin 18 is entered through cap positioning holes 16.1a and 16.1b as well as through pipe positioning holes 15.3a and 15.3b. In this third position the upper row of openings 10 in the gas inlet pipe 10 is completely closed by the collar 17 which surrounds the pipe 10.

While in the embodiments of figures 1, 2 and 6 to 8 exactly one pin 18 is depicted, there may be one pin for each pair of a cap positioning hole 16.1a and a pipe positioning hole 15.1a in the respective position. Such a pin has preferably a length, so that it does not protrude over the inner surface 10i of the gas inlet pipe 10 and the outer surface 20o of the gas distribution cap 20, thereby avoiding/minimizing contact with the gas and/or with the particulate matter (on the outside of the gas distribution cap 20).

## Claims

1. Fluidized bed gas distribution nozzle with the following features in its functional position:
- a gas inlet pipe (10), having
• an inner surface (10i),
• an outer surface (10o),
• a lower end section (10l) adapted to receive gas from an associated gas source,
• an upper end section (10u),
• a plurality of openings (12) formed in the gas inlet pipe (10), each opening (12) extending form the inner surface (10i) of the gas inlet pipe (10) to the outer surface (10o) of the gas inlet pipe (10),
- a gas distribution cap (20) connected or connectable to the gas inlet pipe (10), having
• an upper top (20u),
• a lower bottom (20l) arranged at a vertical distance below said upper top (20u) and surrounding the gas inlet pipe (10),
• a peripheral wall (20w) having an inner surface (20i) and an outer surface (20o) and extending between said upper top (20u) and said lower bottom (201),
• outlets (22) within the peripheral wall (20w) extending from the inner surface (20i) of the peripheral wall (20w) to the outer surface (20o) of the peripheral wall (20w),
wherein
the gas distribution cap (20) can be connected at least in a first position and in a second position to the gas inlet pipe (10), wherein in the second position the gas distribution cap (20) at least partly closes at least some of the openings (12), wherein the second position and the first positions is a predetermined connecting position,
**characterized in that** the gas inlet pipe (10) and the gas distribution cap (20) are mechanically embodied to provide the first predetermined connecting position and the second predetermined connecting position, so that a respective predetermined connecting position is uniquely identified by a respective mechanical feature of the gas inlet pipe (10) and its corresponding mechanical feature of the gas distribution cap (20).

2. Gas distribution nozzle according to claim1, wherein in the first position the gas distribution cap (20) is arranged offset to the second position in the longitudinal direction.

3. Gas distribution nozzle according to one of the preceding claims, recesses (13) and corresponding protrusions (14) being formed at the upper end section (10u) of the gas inlet pipe (10) and on an inner side of the upper top of the gas distribution cap (20), wherein the recesses (13) are arranged within the corresponding protrusions (14) in one of the positions and not in the other position.

4. Gas distribution nozzle according to one of the preceding claims, the gas inlet pipe (10) having at least a first pipe group of two pipe positioning holes (15.1a, 15.1b) and the gas distribution cap (20) having at least a first cap group of two cap positioning holes (16.1a, 16.1b), the two cap positioning holes (16.1a, 16.1b) corresponding to the pipe positioning holes (15.1a, 15.1b), wherein at least one pin (18) extends through the pipe positioning holes (15.1a, 15.1b) and the cap positioning holes (16.1a, 16.1b) to connect the gas distribution cap (20) to the gas inlet pipe (10).

5. Gas distribution nozzle according to claim 4, wherein the gas inlet pipe (10) comprises a second pipe group of at least two pipe positioning holes (15.2a, 15.2b), the pipe positioning holes (15.2a, 15.2b) of the second pipe group being arranged offset in the longitudinal and/or circumferential direction relative to the pipe positioning holes (15.1a, 15.1b) of the first pipe group.

6. Gas distribution nozzle according to claim 4 or 5, wherein the gas distribution cap (20) comprises a second cap group of at least two cap positioning holes, the cap positioning holes of the second cap group being arranged offset in the longitudinal and/or circumferential direction relative to the cap positioning holes (16.1a, 16.1b) of the first cap group.

7. Gas distribution nozzle according to one of the preceding claims, the openings (12) of the gas inlet pipe (10) being arranged at least in a first group of openings (12) and a second group of openings (12), the first group of openings (12) and the second group of openings (12) being arranged offset to each other in a longitudinal direction of the gas inlet pipe (10), wherein in the second position the first group of openings is at least partly closed by the gas distribution cap (20).

8. Gas distribution nozzle according to claim 7, each group of openings (12) being arranged in a row extending in the circumferential direction of the gas inlet pipe (10).

9. Gas distribution nozzle according to one of the preceding claims, the gas distribution cap (20) having a collar (17) extending into or surrounding the upper end section (10u) of the gas inlet pipe (10) at least in the second position, whereby the collar (17) at least partly closes at least some of the openings (12).

10. Gas distribution nozzle according to one of the preceding claims, the outlets (22) of the gas distribution cap (20) and the openings (12) of the gas inlet pipe (10) being arranged offset to each other in the longitudinal direction of the gas inlet pipe (10).

11. Fluidized bed reactor including a plurality of fluidized bed gas distribution nozzles according to one of claims 1 to 10.

12. Fluidized bed reactor according to claim 11, wherein the fluidized bed gas distribution nozzles of a first group have their gas distribution caps (20) connected in the first position to their gas inlet pipe (10) and the fluidized bed gas distribution nozzles of a second group have their gas distribution caps (20) connected in the second position to their gas inlet pipe (10).

## Patentansprüche

1. Wirbelschichtgasverteilerdüse mit folgenden Merkmalen in ihrer Funktionsstellung:
- einem Gaseinlassrohr (10), aufweisend
• eine Innenfläche (10i),
• eine Außenfläche (10o),
• einen unteren Endabschnitt (101), der zur Aufnahme von Gas aus einer zugehörigen Gasquelle geeignet ist,
• einen oberen Endabschnitt (10u),
• eine Vielzahl von Öffnungen (12), die in dem Gaseinlassrohr (10) ausgebildet sind, wobei sich jede Öffnung (12) von der Innenfläche (101) des Gaseinlassrohrs (10) zu der Außenfläche (10o) des Gaseinlassrohrs (10) erstreckt,
- eine Gasverteilerkappe (20), die mit dem Gaseinlassrohr (10) verbunden oder verbindbar ist, aufweisend
• ein oberes Oberteil (20u),
• einen unteren Boden (201), der in einem vertikalen Abstand unterhalb des oberen Oberteils (20u) angeordnet ist und das Gaseinlassrohr (10) umgibt,
• eine Umfangswand (20w), die eine Innenfläche (20i) und eine Außenfläche (20o) aufweist und sich zwischen dem oberen Oberteil (20u) und dem unteren Boden (201) erstreckt,
• Auslässe (22) innerhalb der Umfangswand (20w), die sich von der Innenfläche (20i) der Umfangswand (20w) zu der Außenfläche (20o) der Umfangswand (20w) erstrecken,
wobei
die Gasverteilerkappe (20) mindestens in einer ersten Position und in einer zweiten Position mit dem Gaseinlassrohr (10) verbunden werden kann, wobei in der zweiten Position die Gasverteilerkappe (20) mindestens einige der Öffnungen (12) mindestens teilweise verschließt, wobei die zweite Position und die erste Position eine vorbestimmte Verbindungsposition ist,
**dadurch gekennzeichnet, dass** das Gaseinlassrohr (10) und die Gasverteilerkappe (20) mechanisch
ausgebildet sind, um die erste vorbestimmte Verbindungsposition und die zweite vorbestimmte Verbindungsposition bereitzustellen, so dass eine jeweilige vorbestimmte Verbindungsposition durch ein jeweiliges mechanisches Merkmal des Gaseinlassrohrs (10) und sein entsprechendes mechanisches Merkmal der Gasverteilerkappe (20) eindeutig identifiziert wird.

2. Gasverteilerdüse nach Anspruch 1, wobei in der ersten Position die Gasverteilerkappe (20) in Längsrichtung versetzt zur zweiten Position angeordnet ist.

3. Gasverteilerdüse nach einem der vorhergehenden Ansprüche, wobei am oberen Endabschnitt (10u) des Gaseinlassrohres (10) und an einer Innenseite des oberen Oberteils der Gasverteilerkappe (20) Ausnehmungen (13) und entsprechende Vorsprünge (14) ausgebildet sind, wobei die Ausnehmungen (13) innerhalb der entsprechenden Vorsprünge (14) in einer der Positionen und nicht in der anderen Position angeordnet sind.

4. Gasverteilerdüse nach einem der vorhergehenden Ansprüche, wobei das Gaseinlassrohr (10) mindestens eine erste Rohrgruppe von zwei Rohrpositionierungslöchern (15.1a, 15.1b) aufweist und die Gasverteilerkappe (20) mindestens eine erste Kappengruppe von zwei Kappenpositionierungslöchern (16.1a, 16.1b) aufweist, wobei die beiden Kappenpositionierungslöcher (16.1a, 16.1b) den Rohrpositionierungslöchern (15.1a, 15.1b) entsprechen, wobei sich mindestens ein Stift (18) durch die Rohrpositionierungslöcher (15.1a, 15.1b) und die Kappenpositionierungslöcher (16.1a, 16.1b) erstreckt, um die Gasverteilerkappe (20) mit dem Gaseinlassrohr (10) zu verbinden.

5. Gasverteilerdüse nach Anspruch 4, wobei das Gaseinlassrohr (10) eine zweite Rohrgruppe aus mindestens zwei Rohrpositionierungslöchern (15.2a, 15.2b) aufweist, wobei die Rohrpositionierungslöcher (15.2a, 15.2b) der zweiten Rohrgruppe in Längs- und/oder Umfangsrichtung versetzt zu den Rohrpositionierungslöchern (15.1a, 15.1b) der ersten Rohrgruppe angeordnet sind.

6. Gasverteilerdüse nach Anspruch 4 oder 5, wobei die Gasverteilerkappe (20) eine zweite Kappengruppe von mindestens zwei Kappenpositionierungslöchern aufweist, wobei die Kappenpositionierungslöcher der zweiten Kappengruppe in Längs- und/oder Umfangsrichtung versetzt zu den Kappenpositionierungslöchern (16.1a, 16.1b) der ersten Kappengruppe angeordnet sind.

7. Gasverteilerdüse nach einem der vorhergehenden Ansprüche, wobei die Öffnungen (12) des Gaseinlassrohres (10) mindestens in einer ersten Gruppe von Öffnungen (12) und einer zweiten Gruppe von Öffnungen (12) angeordnet sind, wobei die erste Gruppe von Öffnungen (12) und die zweite Gruppe von Öffnungen (12) in einer Längsrichtung des Gaseinlassrohres (10) zueinander versetzt angeordnet sind, wobei in der zweiten Stellung die erste Gruppe von Öffnungen mindestens teilweise durch die Gasverteilerkappe (20) verschlossen ist.

8. Gasverteilerdüse nach Anspruch 7, wobei jede Gruppe von Öffnungen (12) in einer Reihe angeordnet ist, die sich in Umfangsrichtung des Gaseinlassrohrs (10) erstreckt.

9. Gasverteilerdüse nach einem der vorhergehenden Ansprüche, wobei die Gasverteilerkappe (20) einen Kragen (17) aufweist, der sich mindestens in der zweiten Position in den oberen Endabschnitt (10u) des Gaseinlassrohres (10) hinein erstreckt oder diesen umgibt, wobei der Kragen (17) mindestens einen Teil der Öffnungen (12) mindestens teilweise verschließt.

10. Gasverteilerdüse nach einem der vorhergehenden Ansprüche, wobei die Auslässe (22) der Gasverteilerkappe (20) und die Öffnungen (12) des Gaseinlassrohres (10) in Längsrichtung des Gaseinlassrohres (10) zueinander versetzt angeordnet sind.

11. Wirbelschichtreaktor mit einer Vielzahl von Wirbelschichtgasverteilerdüsen nach einem der Ansprüche 1 bis 10.

12. Wirbelschichtreaktor nach Anspruch 11, wobei die Wirbelschichtgasverteilerdüsen einer ersten Gruppe mit ihren Gasverteilerkappen (20) in der ersten Position mit ihrem Gaseinlassrohr (10) verbunden sind und die Wirbelschichtgasverteilerdüsen einer zweiten Gruppe mit ihren Gasverteilerkappen (20) in der zweiten Position mit ihrem Gaseinlassrohr (10) verbunden sind.

## Revendications

1. Buse de distribution de gaz pour lit fluidisé comprenant les caractéristiques suivantes dans sa position fonctionnelle :
- un tuyau d'entrée de gaz (10), ayant
• une surface intérieure (101),
• une surface extérieure (10o),
• une section d'extrémité inférieure (101) adaptée pour recevoir du gaz d'une source de gaz associée,
• une section d'extrémité supérieure (10u) ;
• une pluralité d'ouvertures (12) formées dans le tuyau d'entrée de gaz (10), chaque ouverture (12) s'étendant de la surface inférieure (101) du tuyau d'entrée de gaz (10) vers la surface extérieure (10o) du tuyau d'entrée de gaz (10),
- un bouchon de distribution de gaz (20) connecté ou pouvant être connecté au tuyau d'entrée de gaz (10), ayant
• un dessus supérieur (20u),
• un fond inférieur (20l) agencé à une distance verticale sous ledit dessus supérieur (20u) et entourant le tuyau d'entrée de gaz (10),
• une paroi périphérique (20w) ayant une surface intérieure (20i) et une surface extérieure (20o) et s'étendant entre ledit dessus supérieur (20u) et ledit fond inférieur (20l),
• des sorties (22) à l'intérieur de la paroi périphérique (20w) s'étendant de la surface intérieure (20i) de la paroi périphérique (20w) vers la surface extérieure (20o) de la paroi périphérique (20w),
dans laquelle
le bouchon de distribution de gaz (20) peut être connecté au moins dans une première position et dans une seconde position au tuyau d'entrée de gaz (10), dans lequel dans la seconde position, le bouchon de distribution de gaz (20) ferme au moins partiellement au moins une partie des ouvertures (12), dans lequel la seconde position et la première position est une position de connexion prédéterminée,
**caractérisé en ce que**
le tuyau d'entrée de gaz (10) et le bouchon de distribution de gaz (20) sont mécaniquement inclus pour fournir la première position de connexion prédéterminée et la seconde position de connexion prédéterminée, de façon à ce qu'une position de connexion prédéterminée respective soit identifiée de manière unique par une caractéristique mécanique respective du tuyau d'entrée de gaz (10) et sa caractéristique mécanique correspondante du bouchon de distribution de gaz (20).

2. Buse de distribution de gaz pour lit fluidisé selon la revendication 1, dans laquelle dans la première position, le bouchon de distribution de gaz (20) est agencé décalé vers la seconde position dans la direction longitudinale.

3. Buse de distribution de gaz pour lit fluidisé selon l'une des revendications précédentes, des creux (13) et des saillies correspondantes (14) étant formées sur la section d'extrémité supérieure (10u) du tuyau d'entrée de gaz (10) et sur un côté intérieur du dessus supérieur du bouchon de distribution de gaz (20), dans lequel les creux (13) sont agencés à l'intérieur des saillies correspondantes (14) dans une des positions et non dans l'autre position.

4. Buse de distribution de gaz pour lit fluidisé selon l'une des revendications précédentes, le tuyau d'entrée de gaz (10) ayant au moins un premier groupe de tuyaux de deux trous de positionnement de tuyau (15.1a, 15.b) et le bouchon de distribution de gaz (20) ayant au moins un premier groupe de bouchons de deux trous de positionnement de bouchons (16.1a, 16.1b), les deux trous de positionnement de bouchons (16.1a, 16.1b) correspondant aux trous de positionnement de tuyau (15.1a, 15.b), dans lequel au moins une broche (18) s'étend à travers les trous de positionnement de tuyau (15.1a, 15.b) et les trous de positionnement de bouchons (16.1a, 16.1b) pour connecter le bouchon de distribution de gaz (20) au tuyau d'entrée de gaz (10).

5. Buse de distribution de gaz pour lit fluidisé selon la revendication 4, dans laquelle le tuyau d'entrée de gaz (10) comprend un second groupe de tuyaux d'au moins deux trous de positionnement de tuyau (15.2a, 15.2b), les trous de positionnement de tuyau (15.2a, 15.2b) du second groupe de tuyaux étant agencés décalés dans la direction longitudinale et/ou circonférentielle par rapport aux trous de positionnement de tuyau (15.1a, 15.b) du premier groupe de tuyaux.

6. Buse de distribution de gaz pour lit fluidisé selon la revendication 4 ou 5, dans laquelle le bouchon de distribution de gaz (20) comprend un second groupe de bouchons d'au moins deux trous de positionnement de bouchon, les trous de positionnement de bouchon du second groupe de bouchons étant agencés décalés dans la direction longitudinale et/ou circonférentielle par rapport aux trous de positionnement de bouchons (16.1a, 16.1b) du premier groupe de bouchons.

7. Buse de distribution de gaz pour lit fluidisé selon l'une des revendications précédentes, les ouvertures (12) du tuyau d'entrée de gaz (10) étant agencées au moins dans un premier groupe d'ouvertures (12) et un second groupe d'ouvertures (12), le premier groupe d'ouvertures (12) et le second groupe d'ouvertures (12) étant agencés décalés l'un vers l'autre dans une direction longitudinale du tuyau d'entrée de gaz (10), dans laquelle dans la seconde position, le premier groupe d'ouvertures est au moins partiellement fermé par le bouchon de distribution de gaz (20).

8. Buse de distribution de gaz pour lit fluidisé selon la revendication 7, chaque groupe d'ouvertures (12) étant agencé dans une rangée s'étendant dans la direction circonférentielle du tuyau d'entrée de gaz (10).

9. Buse de distribution de gaz pour lit fluidisé selon l'une des revendications précédentes, le bouchon de distribution de gaz (20) ayant un collier (17) s'étendant jusque dans ou entourant la section d'extrémité supérieure (10u) du tuyau d'entrée de gaz (10) au moins dans la seconde position, ce par quoi le collier (17) ferme au moins partiellement au moins une partie des ouvertures (12).

10. Buse de distribution de gaz pour lit fluidisé selon l'une des revendications précédentes, les sorties (22) du bouchon de distribution de gaz (20) et les ouvertures (12) du tuyau d'entrée de gaz (10) étant agencées décalées l'une vers l'autre dans la direction longitudinale du tuyau d'entrée de gaz (10).

11. Réacteur à lit fluidisé incluant une pluralité de buses de distribution de gaz pour lit fluidisé selon l'une des revendications 1 à 10.

12. Réacteur à lit fluidisé selon la revendication 11, dans lequel les buses de distribution de gaz pour lit fluidisé d'un premier groupe ont leurs bouchons de distribution de gaz (20) connectés dans la première position à leur tuyau d'entrée de gaz (10) et les buses de distribution de gaz pour lit fluidisé d'un second groupe ont leurs bouchons de distribution de gaz (20) connectés dans la seconde position à leur tuyau d'entrée de gaz (10).
